# EUROPÄISCHE PATENTSCHRIFT

(11) **EP 0 362 584 B1**
(45) Veröffentlichungstag und Bekanntmachung des Hinweises auf die Patenterteilung: **11.08.1993**
(21) Anmeldenummer: 89116963.3
(22) Anmeldetag: 13.09.1989
(51) Int. Cl.: F16B 12/52, A47B 13/02

(54) **Möbeleckverbinder**
Furniture corner joint
Assemblage de coins de meuble

(30) Priorität: 13.09.1988 DE 3831138
(43) Veröffentlichungstag der Anmeldung: 11.04.1990
(73) Patentinhaber: ALEX LINDER GMBH, 72636 Frickenhausen (DE)
(72) Erfinder: Braun, Helmut, D-7441 Schlaitdorf (DE); Grossberger, Josef, D-7442 Neuffen (DE); Votteler, Arno, D-7000 Stuttgart 1 (DE)
(74) Vertreter: Schuster, Gregor, Dipl.-Ing.

(56) Entgegenhaltungen:
- AU-A- 490 813
- FR-A- 2 044 122
- FR-E- 89 961
- GB-A- 2 126 682
- LU-A- 84 580

## Beschreibung

Die Erfindung geht aus von einem Möbeleckverbinder nach der Gattung des Hauptanspruchs. Der Zweck derartiger Möbeleckverbinder besteht darin, die dreidimensionale Ausdehnung eines Möbelstücks jeweils an einem Eckknoten zu verbinden, wobei eine solche Verbindung lösbar oder endgültig sein kann. Eine solche Eckverbindung muß insbesondere vom Stützbein ausgehende Hebelkräfte aufnehmen können sowie bei lösbarem Eckknoten montagefreundlich sein, bei ausreichender Stabilität. Besonders im modernen Büromöbeldesign müssen ergänzende Voraussetzungen erfüllt sein, wie die Möglichkeit zur Unterbringung von elektrischen Leitungen sowie eine Baukasteneigenschaft, so daß ein solcher Eckverbinder gleichermaßen bei Schreibtischen, einfachen Tischen oder Schränken Einsatz finden kann. Nicht zuletzt ist die optisch angenehme Gestaltung entscheidend, natürlich in Verbindung mit obengenannten Funktionserfordernissen und mit Gestaltungsmaßnahmen gegen Verletzungen.

Ein bekannter Möbeleckverbinder (DE-A-32 24 166) weist einen profilierten Zapfen auf, der in das entsprechend hohl ausgebildete, ebenfalls profilierte Stützbein gesteckt wird, bis das Stützbein mit seiner oberen Stirnfläche auf eine nach unten weisende Stützfläche stößt. Als Führungsfläche dient dabei die Außenfläche des Zapfens, die der Innenwand im Hohlraum des Stützbeins zugewandt ist. Im Stützbein selbst sind dann Nuten zur Aufnahme der Seitenwände des Möbels vorgesehen, während die Rahmenschenkel an eine extra am Eckverbinder befestigten Flanschleiste anmontiert werden. Die Flanschleiste bildet mit den Rahmenschenkeln eine Auflageebene, auf die dann eine Deckplatte montierbar ist, in der eine entsprechende Ausklinkung für das obere Ende des Eckverbinders vorgesehen werden muss. Abgesehen davon, daß dieser Möbeleckverbinder in der Herstellung außerordentlich aufwendig ist, bietet er nur begrenzte Einsatzmöglichkeiten und verhältnismäßig geringe Stabilität. Schon allein das Ausklinken ist ein schwieriger Arbeitsgang mit erheblichem Einfluß auf die endgültige Gestaltung des Möbels, wobei zudem die überwiegende Beanspruchung auf der Flanschleiste liegt. Eine Baukastenkombination ist zudem nicht möglich.

Die Bemühungen, einen Möbeleckverbinder universell zu gestalten, insbesondere um, außer oben genannten Forderungen, vielfältige Kombinationen zu ermöglichen, ist an einem anderen bekannten, aus einer Achtelkugel gestalteten Eckverbinder erkennbar (DE-C-25 25 565). Bei diesem Achtelkugel-Eckverbinder sind Profilschächte in allen drei Dimensionen vorhanden, so daß ein solcher Eckverbinder auch an der Unterseite eines Möbelstückes einsetzbar ist. Tatsächlich ist jedoch eine solche Achtelkugel ein Kompromis zu Ungunsten der markanten Unterschiede zwischen der Befestigung und vor allem der Beanspruchung von vertikalen und horizontalen Elementen eines Möbelstückes.

Bei einem bekannten Möbeleckverbinder der gattungsgemäßen Art (FR-E 89961) werden die Tragelemente durch Zapfen gebildet, die in als Rahmenschenkel dienende Rohre steckbar bzw. an entsprechende, als Rahmenschenkel dienende Winkel schraubbar sind, wobei der Auflageflansch mit seiner horizontalen Auflagefläche für die Auflage von Arbeitsplatten und dgl., der das Winkelteil oben vollständig abdeckt, höher ist, als die obere horizontale Stirnseite des Zapfens. Entsprechend dieser Gestaltung ist der Verwendungszweck sowie die Stabilität dieses bekannten Möbeleckverbinders entsprechend eingeschränkt. Auch die anderen Möbeleckverbinder weisen eine obere Deckplatte auf, von der aus vertikale Kräfte über den Eckverbinder auf das Stützbein übertragen werden. Dadurch, daß der Eckverbinder für die Horizontale an zwei Profilleisten bindbar ist, ergibt sich dadurch für den Eckverbinder selbst eine außerordentliche und schon mit verhältnismäßig geringen Mitteln erreichbare Vertikalstabilität. Maßgebend ist nunmehr, daß das Stützbein so an den Eckverbinder montierbar ist, daß es ein entsprechendes Biegemoment, was beispielsweise beim verschieben eines Tisches mit freistehendem Bein auftreten kann, übernehmen kann. Dieses zulässige Biegemoment ist bei dem bekannten Verbindungsknoten nur verhältnismäßig gering.

Die Erfindung liegt dem gegenüber die Aufgabe zugrunde einen Möbeleckverbinder der gattungsgemäßen Art zu entwickeln, bei dem hohe Biegemomente vom Stützbein zu den Rahmenschenkeln übertragbar sind, bei gleichzeitiger vielseitiger Befestigungsmöglichkeit zwischen dem Möbeleckverbinder und den Rahmenschenkeln.

Der erfindungsgemäße Möbeleckverbinder mit den kennzeichnenden Merkmalen des Hauptanspruchs hat den Vorteil, daß nicht nur eine äußerst hohe Stabilität vorhanden ist, so daß auch in mehreren Ebenen Aufbauten erfolgen können, sondern es ist eine äußerst vielfältige Kombination an Bauteilen möglich. So kann das Stützbein beispielsweise als vierkantiges, rundes oder sonstig profiliertes Rohr ausgebildet sein, und es können die Rahmenschenkel je nach gewünschtem Einsatz beispielsweise für große Beinfreiheit oder zusätzliche große Biegebelastung unterschiedlich hoch ausgebildet sein. Das Stützbein sowie Rahmenschenkel können auch massiv ausgebildet sein, beispielsweise aus Holz, was eine zusätzliche Gestaltungsmöglichkeit ergibt. Durch die Kragplatten entsteht eine stabile vertikale und horizontale Führung, bei der die Befestigung beispielsweise durch Schrauben an der Kragplatte erfolgen kann. Da der Stützwinkelteil des Möbeleckverbinders auf zwei Seiten, also in zwei Dimensionen, abstützt, ist die Befestigung des Stützbeins sehr einfach - es muß nur entsprechend fest in diesen Stützwinkelteil zwischen dessen Schenkel hineingespannt werden. Das Befestigen des Stützbeins und der beiden Rahmenschenkel am erfindungsgemäßen Möbeleckverbinder erfolgt vorzugsweise durch Schrauben, die ohne Behinderung montierbar sind.

Nach einer vorteilhaften Ausgestaltung der Erfindung sind am Winkelteil am Ende der Schenkel in Richtung Stützbein ausgebildete leistenförmige Erhebungen vorhanden, an die das Stützbein spannbar ist und die schwalbenschwanzartig von Profilstücken anzumontierender Teile hintergreifbar sind. Ähnlich wie bei der Schwalbenschwanzverbindung wird durch das Einschieben eines entsprechenden Profilstückes an das Winkelteil erreicht, daß zum anzumontierenden Teil hohe Kräfte in horizontaler Richtung übernommen werden können, ohne daß deshalb diese Verbindung schwer lösbar oder auch wieder montierbar ist. Besonders die beim Verschieben von Möbeln durch die Beine auf derartige Möbeleckverbinder übertragenen hohen Biegemomente können gut aufgefangen werden, ohne daß deshalb eine örtliche Überbeanspruchung, wie beispielsweise an einer Schraube, auftritt.

Nach einer weiteren vorteilhaften Ausgestaltung der Erfindung ist das Stützbein durch mindestens eine radiale, eine den Winkelteil in dessen Schenkel vorhandene horizontale Bohrung durchdringende Befestigungsschraube am Möbeleckverbinder befestigbar, wobei sich der Kopf der Befestigungsschraube an einer zwischen den Kragplatten vorgesehenen vertikalen Fläche (Auge) abstützt. Insbesondere dadurch, daß die Befestigungsschraube den Stützwinkelteil in dessen Scheitel durchdringt, wird das Stützbein in den Winkel hineingespannt, so daß eine gleichmäßige Anlage des Stützbeins an den Führungsflächen gewährleistet ist. Erfindungsgemäß kann die Führungsfläche des Winkelteils schräg ausgebildet sein, oder es kann eine Verstärkung an der Auflagestelle des Stützbeins vorhanden sein, um dadurch eine zusätzliche Stabilität zu erzielen. Dadurch, daß die die Befestigungsschraube aufnehmende Bohrung durch den Scheitel des Winkelteils verläuft, ist der Schraubenkopf in dem Bereich zwischen den beiden Kragplatten 4 vorhanden und so insbesondere über einen Steckschlüssel gut zugänglich. Durch das Schaffen einer vertikalen Fläche zwischen den Kragplatten, durch die die dort vorhandene Kehle teilweise ausfüllbar ist, wird eine gute, vor allem bearbeitbare Auflage für den Schraubenkopf geschaffen, beispielsweise in Art eines Auges. Vorzugsweise werden zwei Festspannschrauben für die Befestigung des Stützbeines verwendet, um ein gleichmäßiges Spannen des Stützbeines an den Winkelteil des Möbeleckverbinders zu erzielen. Die Befestigungsschrauben übernehmen auch wesentliche vertikale Scherkräfte zwischen Stützbein und Winkelteil.

Nach einer weiteren vorteilhaften Ausgestaltung der Erfindung ist ein Paßstück vorhanden, dessen Außenabmessungen den Innenabmessungen des Stützbeines bzw. des Winkelteils angepaßt sind und in dem mindestens eine Gewindebohrung vorhanden ist für den Eingriff von Befestigungsschrauben. Das Paßstück kann vorteilhafterweise in die obere Öffnung des Stützbeines eingeführt werden, so daß durch die Befestigungsschraube die Wand des Stützbeines durch das Paßstück an die Führungsflächen gespannt wird, so daß eine erhebliche zusätzliche Versteifung des Stützbeines in diesem Bereich erzielt wird. Durch die Anpassung der Form des Paßstückes an die Innenabmessungen des Stützbeines werden die Spannkräfte auf eine größere Fläche der Innenwand des Stützbeines übertragen und entsprechend verteilt. Hinzu kommt, daß als Material ein für das Verschrauben besonders günstiges Material gewählt werden kann, was möglicherweise völlig anders als jenes ist, aus dem das Stützbein besteht. Das Paßtstück kann zudem auch zum Anspannen anderer Teile an den Möbeleckverbinder dienen, also beispielsweise zum Festspannen von irgendwelchen Möbelverkleidungsteilen. Darüber hinaus ist dieses Paßstück auch so anbringbar, daß es nur teilweise in das Stützbein ragt, wobei der herausragende Teil zum Aufstecken und Befestigen eines weiteren Stützbeines dienen kann, beispielsweise für eine zusätzlich aufzubauende Ebene oder Rückwand eines Möbels.

Nach einer weiteren vorteilhaften Ausgestaltung der Erfindung weist das Paßstück auf seiner Mantelfläche, insbesondere an einer der Stirnseiten, eine radiale Erweiterung auf, die als Profilstück in das Winkelteil die leistenförmigen Erhebungen hintergreifend einsteckbar ist. Hierdurch werden die Vorteile einerseits des obengenannten schwalbschwanzartigen, hohe Kräfte übernehmenden Profilstücks mit andererseits der hohe vertikale Kräfte aufnehmenden Kombination von Paßstück und Befestigungsschrauben verbunden.

Nach einer weiteren vorteilhaften Ausgestaltung der Erfindung sind die Schenkel des Winkelteils an ihrem oberen Ende über eine Stützflansch miteinander verbunden, dessen horizontale Fläche als Auflagefläche dem Querschnitt des Stützbeins entspricht. Dadurch, daß der Stützflansch, an dem sich von unten das Stützbein abstützt, die beiden Schenkel des Winkelteils miteinander verbindet, entsteht eine zusätzliche Versteifung des Winkelteils, so daß wie bei allen derartigen Versteifungen die Materialanhäufung bei einem solchen Möbeleckverbinder möglichst gering gehalten werden kann, was besonders dann eine Rolle spielt, wenn der Möbeleckverbinder als Spritzgußteil oder aus Kunststoff hergestellt wird. Die Stützscheibe weist vorteilhafterweise eine zentrale vertikale Bohrung auf für eine Befestigungsschraube. Erforderlichenfalls ist für diese vertikal verlaufende, den Stützflansch durchdringende Schraube und bei einer rohrförmigen Ausbildung des Stützbeins dieses oben durch eine Platte mit einer entsprechenden Gewindebohrung verschlossen. Natürlich kann statt der vertikalen Schraube oder zusätzlich auch ein Zapfen an dem Stützflansch vorhanden sein, der in eine entsprechende Ausnehmung des Stützbeins greift, um so eine Verhakung zu bewirken, so daß in Verbindung mit der horizontalen Befestigungsschraube eine in zwei Richtungen kraftschlüssige Verbindung zwischen Möbeleckverbinder und Stützbein vorhanden ist.

Nach einer weiteren vorteilhaften Ausgestaltung der Erfindung sind die Kragplatten jeweils paarweise vorhanden, wobei zwischen jedem Kragplattenpaar einer der Rahmenschenkel befestigbar ist.

Nach einer weiteren vorteilhaften Ausgestaltung der Erfindung weist jedes Kragplattenpaar oben eine horizontale, als Auflageflansch dienende Verbindung auf.

Dieser Auflageflansch kann gegebenenfalls mit dem Versteifungssteg in einer Ebene angeordnet sein und dient einerseits zur Auflage von irgendwelchen Platten, beispielsweise der Abdeckplatte des Tisches oder aber auch zur Aufnahme von Bohrungen, über die irgendwelche Abdeckplatten am Möbeleckverbinder festschraubbar sind.

Nach einer weiteren Ausgestaltung der Erfindung sind die Kragplatten stützarmartig nach oben gerichtet unter Bildung einer zwischen dem Kragarm und dem oberen Abschnitt des Winkelteils nach oben gerichteten Öffnung, um insbesondere für Kabel einen Durchgang zwischen Stützwinkel und Kragplatte zu erhalten. Besonders bei moderner Bürotechnik ist es ein erhebliches Problem, ausreichend viel Kanäle für die Kabelführung zu finden, ohne daß deshalb eine unansehnliche Konstruktion entsteht. Besonders bei einer Konstruktion in Art eines nach oben gerichteten, abzweigenden Armes verbleibt eine hohe Stabilität ohne räumliche Nachteile, da der Kragarm auch in die Richtung weist, in die ein Rahmenschenkel verläuft. Zwischen den beiden als Arme ausgebildeten Kragplatten ist für den Anschlag der Rahmenschenkel vorteilhafterweise ein vertikales Blech anbringbar, welches besonders in Verbindung mit dem die beiden Kragplatten verbindenden Auflageflansch eine erhebliche zusätzliche Versteifung liefert und außerdem als horizontaler Anschlag für den dort vorgesehenen Rahmenschenkel dient.

Nach einer weiteren vorteilhaften Ausgestaltung der Erfindung ist die dem Winkelteil abgewandte Begrenzungskante und gegebenenfalls die dieser abgewandten und dem Stützwinkel zugewandte Kante der Kragplatte einviertelkreisförmig ausgebildet. Hierdurch wird insbesondere auf der dem Winkelteil zugewandten Seite erreicht, daß irgendwelche Kabel ein gutes Auflager erhalten, während auf der Außenseite erreicht wird, daß zumindestens auf die Breite der Rahmenschenkel eine gute seitliche Führung durch die Kragplatten gegeben ist.

Nach einer weiteren vorteilhaften Ausgestaltung der Erfindung ist zwischen dem Winkelteil und dem Stützbein eine im Querschnitt dem Winkelteil und/oder dem Stützbein angepaßte Rasterschiene angeordnet, mit Schlitzen oder Nuten auf den Längsstirnseiten zur vertikalen Befestigung von sonstigen Möbelteilen oder Anbauteilen. Diese Zusatzschiene dient als Adapter für alle möglichen Teile. Einerseits können an dieser Rasterschiene die vertikalen Möbelwände befestigt werden und andererseits Zusatzgeräte oder Tablare als Ablage. Da diese Rasterschiene fest zwischen Stützbein und Möbeleckverbinder eingespannt ist und die eigentliche Verbindungsfunktion zwischen den vertikalen Möbelwänden übernehmen kann, ist die Gestaltung des Stützbeines unabhängig von irgendwelchen Befestigungsmitteln möglich. Die Rasterschiene ist eine je nach Zweck wichtige Ausgestaltung, die jedoch bei der einfachen Verwendung der Möbeleckverbindung, beispielsweise für einen Tisch, nicht erforderlich ist.

Nach einer weiteren vorteilhaften Ausgestaltung der Erfindung ist der Querschnitt der Rasterschiene ein gleichschenkliger und rechtwinkliger Winkel, dessen Schenkellängen in eingebautem Zustand bündig mit denen des Winkelteils sein können. Nach einer vorteilhaften Ausgestaltung können in der Stirnseite der Rasterschienenschenkel je eine Reihe von Langlöchern vorhanden sein, wobei auf den dem Stützbein abgewandten Schenkelflächen je eine Längsnut, insbesondere T-förmigen Querschnitts, vorhanden sein kann. Während die vertikalen Möbelwände an der Längsnut verankert werden können, kann die unterbrochene Schlitzreihe zur Einhängung sonstiger Anbauteile oder Gegenstände dienen.

Nach einer weiteren vorteilhaften Ausgestaltung der Erfindung ist ein Profilstück vorhanden, das senkrecht am Winkelteil hinter die leistenförmigen Erhebungen schiebbar ist und an dem Befestigungslaschen angeordnet sind, an denen horizontale oder vertikale Möbelteile befestigbar sind. Aufgrund dieser schwalbenschwanzartigen Einhängung eines solchen Profilstücks können Möbelteile sehr einfach, aber ohne zusätzliches Verschrauben am Möbeleckverbinder eingehängt werden, wobei natürlich das Profilstück selbst mit diesem Möbelteil verbunden sein muß, beispielsweise durch Schrauben.

An den erfindungsgemäßen Möbeleckverbindern können aufgrund der Vielflanschausbildung nach Bedarf entsprechende Bohrungen vorgesehen sein, um so die zu befestigenden Teile zu verschrauben. Hierzu gehören natürlich auch Beschläge, die ein begrenztes Verschieben der Tischplatte ermöglichen, um so an einem Kabelkanal ohne großes Verschrauben heranzukommen.

Weitere Vorteile und vorteilhafte Ausgestaltungen der Erfindung sind der nachfolgenden Beschreibung, der Zeichnung und den Ansprüchen entnehmbar.

Zwei Ausführungsbeispiele eines erfindungsgemäßen Möbeleckverbindes sind mit Varianten und anhand mehrerer Anwendungsfälle in der Zeichnung dargestellt und im folgenden näher beschrieben. Es zeigen:
- Fig. 1: das erste Ausführungsbeispiel als kleinerer Möbeleckverbinder in perspektivischer Explosionsdarstellung;
- Fig. 2: eine verkleinerte Darstellung des ersten Ausführungsbeispiels in eingebautem Zustand;
- Fig. 3: das zweite Ausführungsbeispiel als größerer Möbeleckverbinder in perspektivischer Explosionsdarstellung;
- Fig. 4 und 5: eine Seitenansicht und ein Schnitt gemäß Linie V in Fig. 4 des ersten Ausführungsbeispiels in eingebautem Zustand;
- Fig. 6: ein Schreibtisch unter Anwendung des zweiten Ausführungsbeispiels;
- Fig. 7: eine Übereckausgestaltung unter Verwendung des ersten sowie des zweiten Ausführungsbeispiels;
- Fig. 8 - 11: Schreibtische mit Aufbau, unter Verwendung beider Ausführungsbeispiele;
- Fig. 12 u. 13: eine Variante der beiden Ausführungsbeispiele in der Draufsicht in eingebautem Zustand.
- Fig. 14: ein Paßstück zur Verankerung des Stützbeins am Winkelteil in der Ansicht;
- Fig. 15 - 18: vier Varianten des Paßstücks in der Draufsicht;
- Fig. 19: ein glattes Eckeinsatzstück in der Drauf- und in der Ansicht;
- Fig. 20: eine Verbindungslasche in der Draufsicht und
- Fig. 21 u. 22: die Variante des Möbeleckverbinders gemäß Fig. 13 im Längsschnitt und Querschnitt.

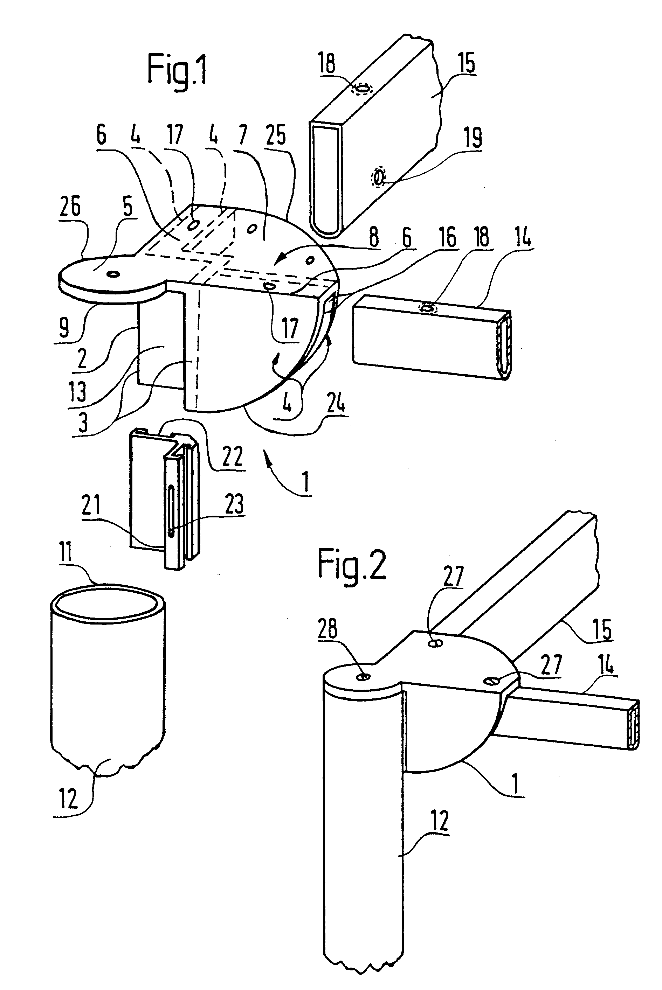

Der in Fig. 1 dargestellte, als erstes Ausführungbeispiel bezeichnete Möbeleckverbinder 1 weist einen vertikal angeordneten Winkelteil 2 auf, an dessen Schenkeln 3 nach außen jeweils ein Paar parallele, einviertelkreisflächige Kragplatten 4 vertikal angeordnet sind. Entsprechend dem von den Schenkeln 3 eingeschlossenen Winkel von 90° schließen auch die beiden Paare der Kragplatten 4 zueinander einen Winkel von 90° ein. Auf der Innenseite des Winkelteils 2 und bündig mit dessen oberen Stirnseite ist ein die beiden Schenkel 3 des Stützwinkelteils 2 miteinander verbindender Stützflansch 5 vorgesehen. Die Oberseite dieses Stützflansches 5 bildet mit den zwei auf der Oberseite an den Kragplatten vorgesehenen Auflageflanschen 6 und einem horizontal verlaufenden und zwischen den Kragplatten 4 vorgesehenen Versteifungssteg 7 eine Gesamtauflagefläche 8.

Die auf der Unterseite des Stützflansches 5 vorhandene Stützfläche 9 dient der Auflage der oberen Stirnseite 11 eines rohrförmig ausgebildeten Stützbeines 12. Am Winkelteil 2 des Möbeleckverbinders sind vertikale Führungsflächen 13 vorhanden, an denen sich das Stützbein 12 in horizontaler Richtung abstützen kann.

Der Abstand der paarweise vorhandenen Kragplatte 4 entspricht gerade der Breite von zwei unterschiedlich hohen Rahmenschenkeln 14, 15, die als Zargen zum nächsten, hier nicht dargestellten Eckverbinder führen. Diese Rahmenschenkel 14 und 15 werden jeweils zwischen ein Kragplattenpaar geschoben, so daß sie zwischen den dort einander gegenüberliegenden Einspannflächen 16 befestigbar sind. Zur Befestigung dienen Schrauben, die die dafür vorgesehenen Löcher 17 durchdringen, um in entsprechende Gewindebohrungen der Rahmenschenkel 14 und 15 zu greifen. Zusätzlich können die Rahmenschenkel auch seitlich festgeschraubt werden, wofür die Befestigungsschraube ein in der Darstellung verdecktes Loch der inneren Kragplatten durchdringt, um in eine Gewindebohrung 19 des Rahmenschenkels 15 zu greifen.

Zwischen dem Stützbein 12 und der Führungsfläche 13 des Winkelteils 2 ist eine Rasterschiene 21 angeordnet, die mit dem Stützbein 12 an die Führungsfläche 13 des Winkelteils 2 gespannt wird, und die in erster Linie Montagefunktion hat. Diese einen winkelförmigen Querschnitt aufweisende Rasterschiene 21 weist auf den einander abgewandten Schenkelflächen jeweils eine Längsnut 22 T-förmigen Querschnitts auf. Diese Längsnuten 22 dienen vor allem der Befestigung vertikal anzuordnender Dichtungsprofile. Auf den Stirnseiten der Rasterschiene 21 hingegen sind eine entsprechende Anzahl von Langlöchern 23 vorhanden, die vor allem zur Anbringung zusätzlicher Anbauteile dienen, wie beispielsweise Ablageplatten, die hier eingehakt werden können.

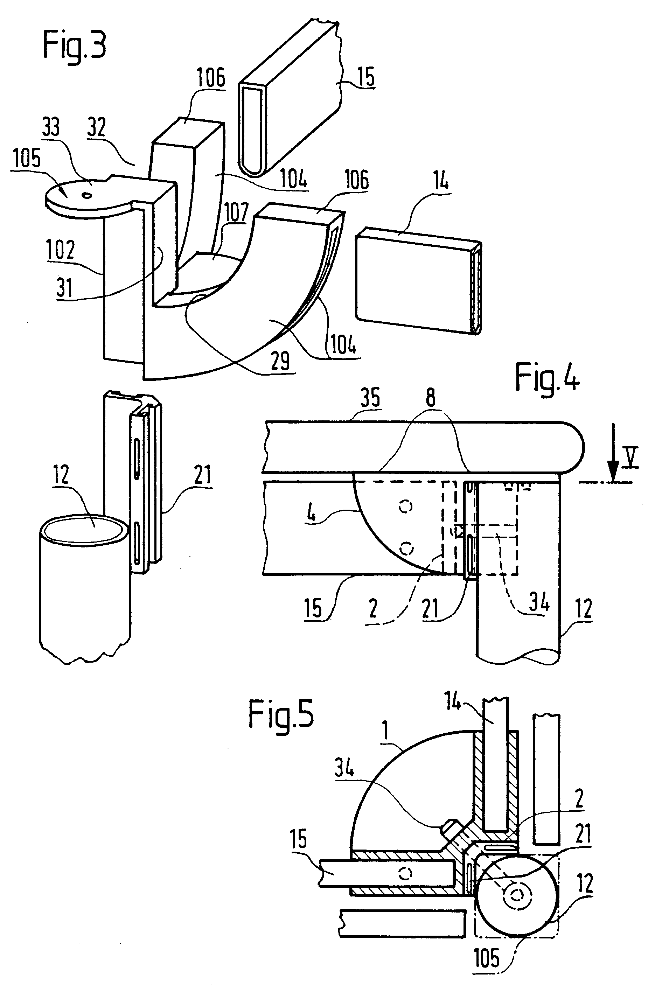

Die freien Begrenzungskanten 24 der Kragplatten 4 und die Begrenzungsschraube 25 des Versteifungsstegs 7 sind einviertelkreisförmig. Die Begrenzungskante 26 des Stützflansches 5 hingegen ist dreiviertelkreisförmig ausgebildet. Natürlich können diese Begrenzungskanten auch anders ausgebildet sein, wobei insbesondere die Begrenzungskante 26 des Stützflansches 5 der Form des Stützbeines 12 angepasst sein kann, welches außer einem quadratischen Querschnitt auch irgendeinen sonstigen Querschnitt aufweisen kann (siehe Fig. 5). Auch die Unterseite der Rahmenschenkel 14, 15 ist abgerundet ausgebildet, um außer einem günstigen optischen Eindruck vor allem Verletzungen zu unterbinden.

In Fig. 2 sind der erfindungsgemäße Möbeleckverbinder 1, das Stützbein 12 und die Rahmenschenkel 14 und 15 in zusammengebautem Zustand dargestellt. Die Rahmenschenkel 14 und 15 sind über Schrauben 27 festgeschraubt und das Stützbein von oben durch eine Schraube 28, die in ein entsprechendes Gewinde einer Abschlußplatte oder eines Paßstücks des Stützbeins 12 greift, die bzw. das in Fig. 1 nicht dargestellt ist. Ebenfalls nicht dargestellt ist eine das Stützbein 12 an die Führungsflächen 13 spannende, horizontal das Winkelteil 2 im Scheitel durchdringende Befestigungsschraube.

In Fig. 3 ist das zweite Ausführungsbeispiel des erfindungsgemäßen Möbeleckverbinders dargestellt. Die Bezugszahlen der dem ersten Ausführungsbeispiel entsprechenden Teile weisen eine um 100 erhöhte Ziffer auf. Die Kragplatten 104 sind hier zweigartig ausgebildet und so nach oben gekrümmt, daß je eine innere, ebenfalls einen Viertelkreis bildende Begrenzungskante 29 entsteht. Der obere Teil 31 des Winkelteils 102 tritt hier deutlich als Winkel hervor. Der Versteifungssteg 107 ist weiter nach unten verlegt, um so die durch die zweigartigen Kragplatten 104 gebildeten Öffnungen 32 nach oben offen zu halten. In diese Öffnungen können nach Freilegen, beispielweise leichtem Verschieben der diese Öffnung 32 abdeckenden Tischplatte, Kabel und dergleichen eingelegt werden. Statt der großen Auflagefläche beim ersten Ausführungsbeispiel sind hier nur noch die Oberfläche 33 des Stützflansches 105 und die Auflageflansche 106 der Kragplatten 104 in einer horizontalen Ebene angeordnet. Im übrigen sind die anderen Bauteile, wie das Stützbein 12, die Rasterschiene 21 und die Rahmenschenkel 14 und 15 die gleichen wie beim Ausführungsbeispiel und in gleicher Art am Eckverbinder 101 zu befestigen.

In Fig. 4 und 5 ist eine Ecke eines Möbels mit dem kleineren Eckverbinder 1 in der Seitenansicht gezeigt. Das Stützbein 12 ist an den Winkelteil 2 des Eckverbinders 1 über eine Befestigungsschraube 34 gespannt, unter gleichzeitiger Einspannung der Rasterschiene 21. An das gezeigte Kragplattenpaar 4 ist der höhere Rahmenschenkel 15 geschraubt. Das Möbel weist außerdem eine Abdeckplatte 35 auf, die die Auflagefläche 8 vollständig abdeckt. Der Stützflansch 105 ist hier als Variante rechteckig ausgebildet, obwohl das Stützbein 12 einen runden Querschnitt aufweist.

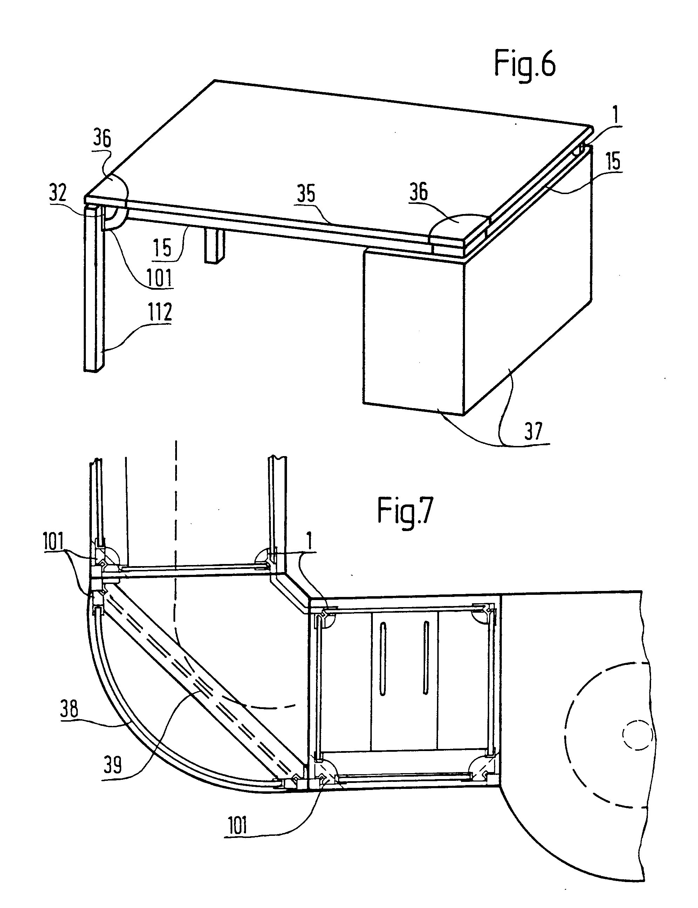

In Fig. 6 ist ein Schreibtisch gezeigt, der unter Verwendung des zweiten Ausführungsbeispiels auf der Rückseite, also des großen Eckverbinders 101 und des ersten Ausführungsbeispiels auf der Vorderseite, also des kleinen Eckverbinders 1, ausgestattet ist. Um an die Öffnungen 32 des großen Eckverbinders 101 ohne Demontieren der Abdeckplatte 35 gelangen zu können, sind mit der Oberfläche der Abdeckplatte 35 bündige Dreieckplatten 36 eingesetzt, die verhältnismäßig leicht demontierbar sind. Die Stützbeine 112 weisen bei diesem Möbel einen quadratischen Querschnitt auf. Außerdem weist dieser Schreibtisch Wandverkleidungen 37 auf, die in nicht erkennbarer Weise an den Rahmenschenkeln 15 bzw. den hier verdeckten Rasterschienen 21 befestigt sind.

In Fig. 7 ist ein Übereckmöbelstück ohne Abdeckplatte gezeigt, bei dem wiederum auf der Außenseite die größeren Eckverbinder 101 und auf der Innenseite die kleineren Eckverbinder 1 verwendet sind. Entsprechend der Krümmung auf der Außenseite ist auch der zugeordnete Rahmenschenkel 38 gekrümmt. Ein Steg 39 dient als Kabelkanal, der sich an der Rückseite der beiden Eckverbinder 101 abstützt. Bei der weiter hinten beschriebenen Variante der Ausführungsbeispiele wird die Stützkraft über vier Laschen aufgenommen, die in den schwalbenschwanzförmigen Öffnungen der Eckverbinder 301 eingesetzt sind, wobei der Steg 39 als nicht tragender Kabelkanal dient.

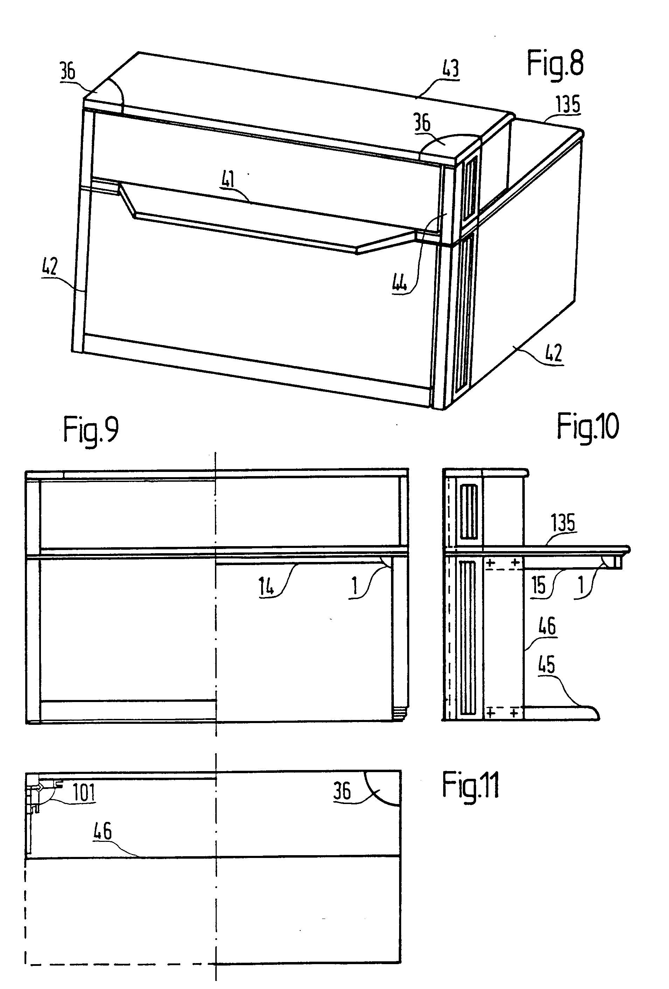

Aufgrund der stabilen baukastenorientierten Ausführung der Eckverbinder 1 und 101 kann auf ein Grundmöbel ein entsprechend ausgebildeter Aufbau aufgesetzt werden. Bei dem in Fig. 8 dargestellten Beispiel weist die Abdeckplatte 135 einen auf der Außenseite herausragenden Abschnitt 41 auf, der beispielsweise als Ablage dienen kann. Im übrigen sind auch bei diesem Möbel Wandverkleidungen 42 vorhanden, die entsprechend an dem Eckverbinder befestigt sind. Der Aufbau 43 ist grundsätzlich so wie der untere Grundteil des Möbels aufgebaut, wobei bei der Abdeckplatte 135 die sonst Dreieckplatten entfernt sind, so daß in die durch dieses Freilegen gegebenen Auflageflächen, bzw. die Auflagefläche des Stützflansches, ein kurzes Stützbein 44 aufsetzbar ist, an das sich an seinem oberen Ende wiederum ein hier verdeckter Eckverbinder anschließt. Dieser Eckverbinder ist dann wiederum durch eine Dreiecksplatte 36 abgedeckt.

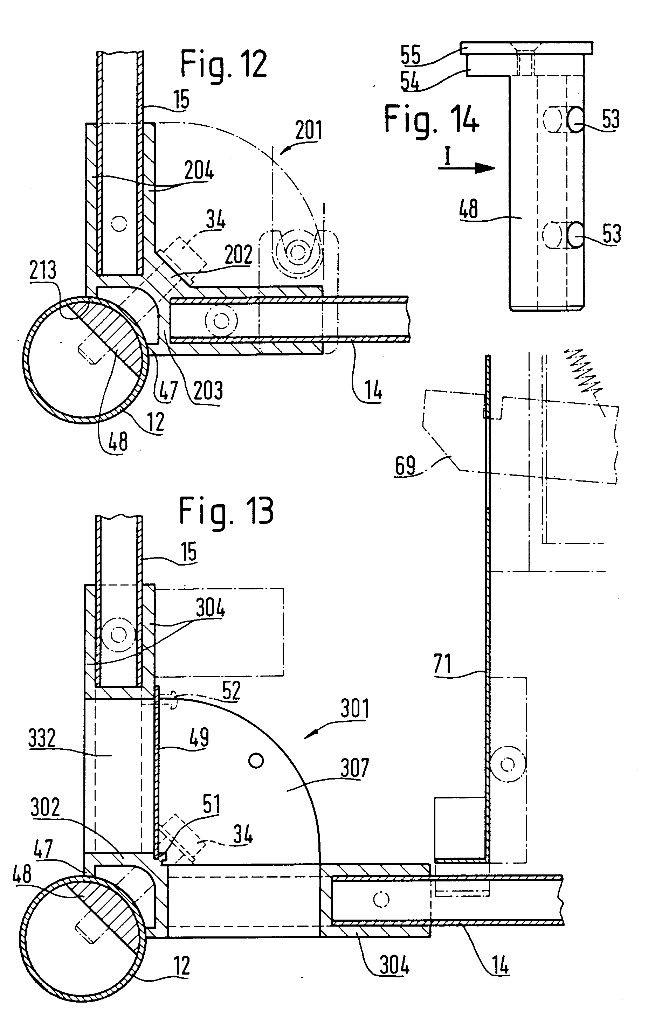

Am in den Fig. 9-11 dargestellten Möbelbeispiel ist ein solches Aufbaumöbel in etwas anders gestalteter Art gezeigt. In Fig. 9 ist dieses Möbel in der linken Hälfte von der Rückseite und in der rechten Hälfte von der Vorderseite gezeigt; in Fig. 11 von oben, dabei links ohne obere Abdeckplatte. Die Rückseite entspricht in etwa der des Möbels aus Fig. 8. Die Vorderseite hingegen zeigt beim Schreibtisch die Verwendung des kleinen Eckverbinders 1 mit dem niedrigeren Rahmenschenkel 14. In Fig. 10 ist die Seitenansicht dieses Möbels gezeigt, wobei die Schreibtischplatte 35 als herauskragende Platte ausgebildet ist, die seitlich jeweils auf einen höheren Rahmenschenkel 15 aufliegt, der wiederum auf der Vorderseite in den kleinen Eckverbinder 1 übergeht, hingegen auf der Rückseite, wie in Fig. 11 gezeigt, zu einem großen Eckverbinder 101 führt. Zur zusätzlichen Stabilität sind zwischen diesen Rahmenschenkeln 15 und einem Fußbalken 45 eine mit beiden Teilen verschraubte Seitenwand 46 vorgesehen. Der Aufbau ist im Prinzip so wie bei dem Möbel in Fig. 8 ausgeführt.

In den Fig. 12 - 22 ist eine Variante der beiden Ausführungsbeispiele dargestellt, mittels der die Kombinationsmöglichkeiten des Baukastensystems des Möbeleckverbinders erweiterbar sind, bei gleichzeitiger Erhöhung der Festigkeit.

In Fig. 12 ist die Variante für das erste Ausführungsbeispiel dargestellt und zwar anhand eines Horizontalschnittes. An den Schenkeln 203 des Winkelteils 202 sind auf der dem Stützbein 12 zugewandten Seite bzw. am Ende dieser Schenkel 203 leistenförmige Erhebungen 47 angeordnet, deren Stirnflächen als Führungsflächen 213 dienen. Außerdem ist ein Kern 48 vorgesehen, dessen dem Winkelteil 202 zugewandte Außenwand der Innenwand des Stützbeines 12 entspricht, und in welchem eine Gewindebohrung für die Befestigungsschraube 34 vorhanden ist. Beim Anspannen durch die Schraube 34 wird die Wandung des Stützbeines 12 über den Kern 48 fest auf die Führungsflächen 213 gepreßt, wodurch sich ein guter, stabiler Formschluß und Kraftschluß zwischen Stützbein 12 und Winkelteil 202 ergibt.

Grundsätzlich das Gleiche gilt für die in Fig. 13 dargestellte Variante des zweiten Ausführungsbeispiels. Bei dieser Variante ist außerdem ein horizontales Verschließen der der Kanalführung dienenden Öffnungen 332 möglich, nämlich durch Verschlußplatten 49, die am Winkelteil 302 in dort vorgesehene Vertikalschlitze 51 steckbar sind und andererseits über Spreizzapfen 52 an den Kragplatten 304 befestigt sind. Bei Bedarf können diese Verschlußplatten 49 entfernt werden, oder sie können an der Stelle angeordnet werden, wo keine Kabelführung gewünscht ist.

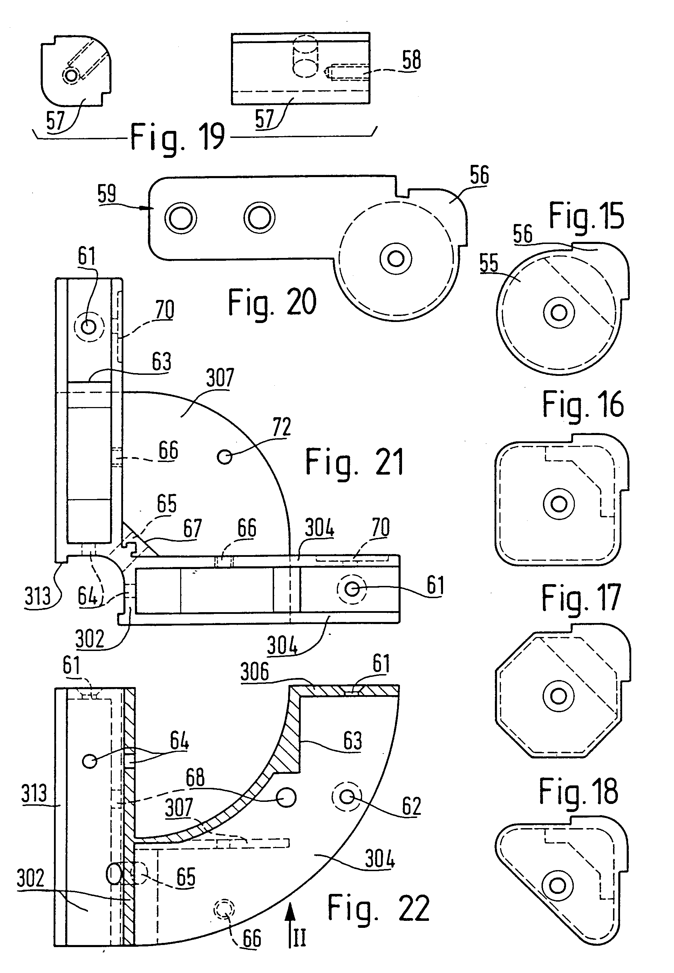

In Fig. 14 ist der Kern 48 in der Seitenansicht dargestellt. Die Ausbildung dieses Kerns ist für beide Ausführungsbeispiele gleich. Während der Kern in seinem unteren Abschnitt von der Seite I her verjüngt ist und in diesem verjüngten Abschnitt zwei Gewindebohrungen 53 für die Befestigungsschrauben aufweist, entspricht der Querschnitt des oberen Abschnitts 54 den inneren Abmessungen des Stützbeins 12, um so beim Reinstecken des Kerns 48 in das Stützbein 12 eine gute radiale Führung aufzuweisen. An den oberen Abschnitt 54 schließt sich eine etwas größere Abdeckplatte 55 an, die vom Kern 48 geteilt sein kann, die in der Draufsicht in den Fig. 15 - 18 dargestellt ist und die der zusätzlichen Verankerung des Stützbeines 12 am Winkelteil 202 bzw. 302 dient.

In den Fig. 15 - 18 sind vier verschiedene Abdeckplatten 55 entsprechend vier verschieden ausgestalteter Kerne in der Draufsicht dargestellt. Während die Außenabmessungen über mehr als dreiviertel des Umfangs der Abdeckplatten 55 der Außenform des Stützbeins entsprechen, für das der Kern vorgesehen ist, ist ungefähr ein Viertel des Umfangs als Profilplatte 56 gestaltet, deren Fläche dem Freiraum zwischen Winkelteil 202, 302 unter Berücksichtigung der leistenförmigen Erhebungen 47 entspricht, so daß beim Einstecken der Profilplatte in diesen Freiraum die Profilplatte 56 die leistenförmigen Erhebungen 47 hintergreift, im Prinzip wie bei einer Schwalbenschwanzverbindung. Bei der Montage wird somit nach Anlegen des Stützbeines 12 der Kern 48 eingeschoben, wonach im oberen Teil des Eckverbinders die Verhakung stattfindet, die dann durch die Befestigungsschrauben 34 fixiert wird, wobei die Befestigungsschrauben gleichzeitig Vertikalkräfte übernehmen.

In Fig. 15 ist Kern und Abdeckplatte für ein rundes Stützbein gestaltet, in Fig. 16 für ein quadratisches, in Fig. 17 für ein achteckiges und in Fig. 18 für ein dreieckiges Stützbein. Natürlich ist auch jede andere Art von Stützbeingestaltung verwendbar.

In Fig. 19 ist ein Profilkern 57 links von der Stirnseite, rechts in Seitenansicht dargestellt, der auf seine ganze Länge hinter die leistenförmigen Erhebungen 47 steckbar ist, um dann mit einer Befestigungsschraube an den Eckverbinder gespannt werden zu können, wobei dann über eine Gewindebohrung 58 dritte Teile am Eckverbinder festschraubbar sind, auch dann, wenn kein Stützbein vorgesehen ist.

In Fig. 20 ist eine Befestigungslasche 59 dargestellt, die ebenfalls einen solchen Profilteil 61 aufweist, mit dem eine Einhängung hinter den leistenförmigen Erhebungen 47 des Eckverbinders möglich ist, wobei im übrigen an dieser Befestigungslasche 59 sonstige Teile wie Platten und dgl. festschraubbar sind.

In den Fig. 21 und 22 ist die Variante des größeren Eckverbinders 301, in Fig. 21 im Horizontalschnitt, in Fig. 22 im Vertikalschnitt dargestellt. An diesen Schnitten sind vor allem die diversen Bohrungen für den Durchgang von Schrauben erkennbar sowie die Auflage- und Stoßflächen für weitere Möbelteile. Die Rahmenschenkel können durch eine vertikale und eine horizontale Schraube befestigt werden, die einerseits durch die Vertikalbohrung 61 im Auflageflansch und andererseits durch die Horizontalbohrung 62 in der Kragplatte 304 gesteckt sein können. Eine vertikale Anschlagfläche 63 ermöglicht einen Paßsitz zwischen Möbeleckverbinder und Rahmenschenkel. Bohrungen 64 in den Schenkeln des Winkelteils 302 ermöglichen das Festspannen von irgendwelchen Teilen, unabhängig von der oben beschriebenen Art, bei der die Befestigungsschraube 34 in einer durch die Winkelkehle gehenden Bohrung 65 läuft. Eine Bohrung 66 in der Kragplatte 304 unterhalb des Versteifungsstegs 307 ermöglicht die Befestigung von Möbelteilen unabhängig von den Rahmenschenkeln. Die Bohrung 66 ist als Gewindebohrung ausgebildet, um ohne Mutter die zusätzlichen Möbelteile anschrauben zu können. In dem Winkelbereich zwischen den Kragplatten 304 ist eine Auflagefläche 67 vorhanden, an der sich der Kopf der Befestigungsschraube abstützen kann. Eine Bohrung 68 dient zur Befestigung der Verschlußplatte 49 (Fig. 13). Die vielen Bohrungen haben keine Schwächung des Möbeleckverbinders zur Folge, sondern zeigen seine vielfältige Verwendungsmöglichkeit. So kann beispielsweise die Bohrung 72 im Versteifungssteg 307 zum Festschrauben eines Kabelkanals 39 dienen, wie er in Fig. 7 dargestellt ist. An den Kragplatten sind Schlitze (Nuten) 70 angeordnet für die Fixierung und Arretierung der Abdeckplatten. So kann, wie in Fig. 13 angedeutet, nach Lösen einer Klinke 69 die Abdeckplatte nach rechts verschoben werden, wobei der Kabelkanal freigelegt würde. Die Klinke 69 greift bei der Verriegelung in ein Schließblech 71, das wiederum am Möbeleckverbinder 301 verankert ist.

Besondere Vorteile dieser Variante ergeben sich beim Aufbau für mehrere Ebenen, wobei in das oben offene Stützbein ein Kern einsteckbar ist, der gleichzeitig dem Stützbein des Aufbaus als Führung dient. Dadurch ist es nicht erforderlich Eckplatten zu verwenden. Nicht zuletzt kann dieser Möbeleckverbinder auch als Fuß verwendet werden, an dem Rahmenschenkel radial herausragend als Kippsicherung dienen. Über ein entsprechend gestalteten Profilkern können so zwei Möbeleckverbinder zu einem Fuß zusammenverbunden werden. Die profilierte Ausgestaltung mit Hilfe der leistenförmigen Erhebungen 47 kann auch dazu dienen, zwei nebeneinanderliegende Eckverbinder miteinander zu verankern.

Alle in der Beschreibung, den nachfolgenden Ansprüchen und der Zeichnung dargestellten Merkmale können sowohl einzeln als auch in beliebiger Kombination miteinander erfindungswesentlich sein.

| Bezugszahlenliste | | | |
|---|---|---|---|
| 1, | Eckverbinder | 35 | Abdeckplatte |
| 2 | Winkelteil | 36 | Dreieckplatten |
| 3, 203 | Schenkel von 2 | 37 | Wandverkleidung |
| 4, 104 | Kragplatten | 38 | Rahmenschenkel |
| 5 | Stützflansch | 39 | Steg |
| 6 | Auflageflansch | 40 | |
| 7 | Versteifungssteg | 41 | Abschnitt |
| 8 | Auflagefläche | 42 | Wandverkleidung |
| 9 | Stützfläche | 43 | Aufbau |
| 10 | | 44 | Stützbein |
| 11 | Stirnseite oben v. 12 | 45 | Fußbalken |
| 12, 212 | Stützbein | 46 | Seitenwand |
| 13 | Führungsfläche | 47 | leistenf. Erhebung |
| 14 | Rahmenschenkel | 48 | Kern |
| 15 | Rahmenschenkel | 49 | Verschlußplatten |
| 16 | Einspannflächen | 50 | |
| 17 | Löcher | 51 | Vertikalschlitze |
| 18 | Gewindebohrung | 52 | Schrauben |
| 19 | Gewindebohrung | 53 | Gewindebohrung |
| 20 | | 54 | oberer Abschnitt |
| 21 | Rasterschiene | 55 | Abdeckplatte |
| 22 | Längsnut | 56 | Profilplatte |
| 23 | Langlöcher | 57 | Profilkern |
| 24 | Begrenzungskante | 58 | Gewindebohrung |
| 25 | Begrenzungskante | 59 | Befestigungslaschen |
| 26 | Begrenzungskante | 60 | |
| 27 | Schrauben | 61 | Vertikalbohrung |
| 28 | Schrauben | 62 | Horizontalbohrung |
| 29 | Begrenzungskanten | 63 | Anschlagfläche |
| 30 | | 64 | Bohrung |
| 31 | oberer Teil von 102 | 65 | Kehlborhung |
| 32 | Öffnungen | 66 | Gewindebohrung |
| 33 | Oberfläche | 67 | Auflagefläche |
| 34 | Befestigungsschraube | 68 | Bohrung |
| | | 69 | Klinke |
| | | 70 | Schlitze |
| | | 71 | Schließblech |
| | | 72 | Bohrung |

## Patentansprüche

1. Möbeleckverbinder, durch den in Einbaulage ein vertikal anzuordnendes Stützbein (12) rechtwinklig mit zwei vorzugsweise zu weiteren Eckverbindern (1) führenden und unter sich einen rechten Winkel einschließenden, horizontal anzuordnenden Rahmenschenkeln (14, 15) verbindbar ist,
- mit einem vertikal (Kehllinie) angeordneten Winkelteil (2),das Führungsflächen (13) an den Schenkeln (3) als Widerlager zur Stützbeinbefestigung aufweist,
- mit zwei horizontal verlaufenden Kragelementen (4), die zwischen sich einen rechten Winkel einschließen und als Verbindung zu den Rahmenschenkeln dienen und
- mit einem Auflageflansch (6), der eine horizontale Auflagefläche für die Auflage von Arbeitsplatten und dgl. aufweist und mindestens mittelbar am Winkelteil (2) angeordnet ist,
dadurch gekennzeichnet,
- daß jedes Kragelement als Kragplatte (4) ausgebildet ist mit einer vertikal verlaufenden, der Rahmenschenkelbefestigung dienenden Einspannfläche (16),
- daß der Auflageflansch (6) an mindestens einer der zwei Kragplatten (4) unmittelbar und rechtwinklig angeordnet ist und
- daß horizontal zwischen den Kragplatten (4) ein Versteifungssteg (7) angeordnet ist.

2. Möbeleckverbinder nach Anspruch 1 dadurch gekennzeichnet, daß am Winkelteil (202,302) am Ende der Schenkel (203, 303) in Richtung Stützbein (12) ausgebildete, leistenförmige Erhebungen (47) vorhanden sind, mit entsprechenden Führungsflächen (213, 313), an die das Stützbein (12) spannbar ist, und die schwalbenschwanzartig von Profilstücken (56,61, 57) anzumontierender Teile hintergreifbar sind.

3. Möbeleckverbinder nach Anspruch 1 oder 2 dadurch gekennzeichnet, daß das Stützbein (12) durch mindestens eine radiale, den Winkelteil (2) in dessen Schenkel (3)vorhandene horizontale Bohrung (6, 5) durchdringende Befestigungsschraube (34) am Möbeleckverbinder (1, 302) befestigbar ist, wobei sich der Kopf der Befestigungsschraube vorzugsweise an einer in der Kehle zwischen den Kragplatten (4) vorgesehenen vertikalen Fläche (6, 7) (Auge) abstützt.

4. Möbeleckverbinder nach einen der vorhergehenden Ansprüche, dadurch gekennzeichnet, daß ein Kern (48) Paßstück für das Stützbein (12)vorhanden ist, dessen Außenabmessungen mindestens teilweise (54) den Innenabmessungen des Stützbeins (12) bzw. den ihm zugewandten Flächen des Winkelteils (202, 302) angepaßt sind, und in dem mindestens eine Gewindebohrung (53) vorhanden ist, für den Eingriff von sich am Winkelteil (2) abstützenden Befestigungsschrauben (34).

5. Möbeleckverbinder nach Anspruch 4, dadurch gekennzeichnet, daß der Kern (48) auf seiner Mantelfläche, insbesondere an einer der Stirnseiten, eine radiale Erweiterung (Abdeckplatte) (55) aufweist, die als Profilplatte (56) am Winkelteil (202, 203), die leistenförmigen Erhebungen (47) hintergreifend, einsteckbar ist.

6. Möbeleckverbinder nach einem der vorhergehenden Ansprüche, dadurch gekennzeichnet, daß die Schenkel (3) des Winkelteils(2) an ihrem oberen Ende über einen Stützflansch (5) miteinander verbunden sind, dessen horizontale Fläche als Auflagefläche (33) dem Querschnitt des Stützbeins (12) entspricht.

7. Möbeleckverbinder nach einem der vorhergehenden Ansprüche, dadurch gekennzeichnet, daß die Kragplatten (4) jeweils paarweise vorhanden sind.

8. Möbeleckverbinder nach einem der vorhergehenden Ansprüche, dadurch gekennzeichnet, daß jedes Kragplattenpaar (4) oben eine horizontale, als Auflageflansch (6) dienende Verbindung aufweist.

9. Möbeleckverbinder nach Anspruch 7 oder 8, dadurch gekennzeichnet, daß der Versteifungssteg (7) mit dem Auflageflansch (6) gemeinsam die Auflagefläche (8) bildet.

10. Möbeleckverbinder nach einem der vorhergehenden Ansprüche, dadurch gekennzeichnet, daß die Kragplatten (104) stützarmartig nach oben gerichtet sind, unter Bildung einer zwischen diesem Kragarm (104) und dem oberen Abschnitt (31) des Winkelteils (102) nach oben gerichteten Öffnung (32).

11. Möbeleckverbinder nach einem der vorhergehenden Ansprüche, dadurch gekennzeichnet, daß die dem Winkelteil (2) abgewandte Begrenzungskante (24) und gegebenenfalls die dieser wiederum abgewandten und dem Stützwinkel (102) zugewandte Kante (29) /Fig.3) der Kragplatte (4, 104) einviertelkreisförmig ausgebildet ist.

12. Möbeleckverbinder nach einem der vorhergehenden Ansprüche, dadurch gekennzeichnet, daß in den Kragplatten (304) den Auflageflanschen (306), dem Versteifungssteg (307) und/oder im Winkelteil (302) horizontale oder vertikale Bohrungen (61, 62, 64, 65, 66, 68, 72) mit oder ohne Gewinde vorhanden sind zum Festschrauben der Rahmenschenkel oder sonstiger Möbelteile.

13. Möbeleckverbinder nach einem der vorhergehenden Ansprüche, dadurch gekennzeichnet, daß ein Profilstück (57, ) vorhanden ist, das senkrecht am Winkelteil (202, 302), die leistenförmigen Erhebungen (47) hintergreifend, einschiebbar ist, und an dem Befestigungslaschen (59) angeordnet sein können, für die horizontale oder vertikale Montage zusätzlicher Möbelteile.

14. Möbeleckverbinder nach einem der vorhergehenden Ansprüche, dadurch gekennzeichnet, daß zwischen dem Winkelteil (2) und dem Stützbein (12) ein im Querschnitt dem Winkelteil (2) und/oder dem Stützbein (12) angepasste Rasterschiene (21) angeordnet ist, mit Schlitzen (23) und/oder Nuten (22) auf den Längsseiten zur vertikalen Befestigung von sonstigen Möbelteilen oder Anbauteilen.

15. Möbeleckverbinder nach Anspruch 14, dadurch gekennzeichnet, daß der Querschnitt der Rasterschiene (21) gleichschenkelig und rechtwinklig ist, wobei die Schenkellänge bündig mit jener des Stützwinkels (2) sein kann.

16. Möbeleckverbinder nach Anspruch 14 oder 15, dadurch gekennzeichnet, daß in der Stirnseite der Schenkel der Rasterschiene (21) eine Reihe von Langlöchern (23) und auf den dem Stützbein (12) abgewandten Schenkelflächen je eine Längsnut (22) mit vorzugsweise T-förmigem Querschnitt vorhanden ist.

## Claims

1. Furniture corner connector by means of which a vertically arranged supporting leg (12) can be connected at a right-angle in the built-in position with two horizontally arranged frame arms (14, 15), preferably leading to further corner connectors (1) and including a right-angle underneath themselves, and having:
- a vertically arranged angle piece (on the throat line) (2) which has guide flanges (13) on the arms (3) as an abutment for the fixing of the support leg,
- with two horizontal cantilevered elements (4) enclosing between them a right-angled piece and serving as a connection with the frame arm, and
- a top flange (6) to which a horizontal top surface is attached for carrying work-tops or similar, and can be connected at least indirectly to the angled piece (2),
characterised by
- each cantilevered element being formed as a cantilevered plate (4) with a vertical clamping surface (16) serving to hold the frame arm,
- the superior flange (6) being connected directly and at a right-angle to at least one of the two cantilevered plates (4), and
- a stiffening bar (7) being arranged horizontally between the cantilevered plates (4).

2. Furniture corner connector along the lines of Claim 1, characterised by strip-shaped protrusions (47), extended in the direction of the supporting leg (12), being present at the angled piece (202, 302) at the end of the arm (203, 303), with the corresponding guide surfaces (213, 313), to which the supporting leg (12) can be clamped, and by the fact that the parts that can be mounted on it in a swallow-tail shape with extrusions (56, 61, 57) can be gripped from behind.

3. Furniture corner connector along the lines of Claim 1 or 2, characterised by the fact that the supporting leg (12) can be fastened by means of at least one radially and horizontally drilled hole (6, 5) with the angled piece (2) in its arm (3), to the furniture corner connector (1, 302), with the head of the fixing screw preferably being supported by a vertical surface (6, 7) (eye) provided in the throat between the cantilevered plates (4).

4. Furniture corner connector along the lines of one of the foregoing Claims, characterised by a core (48) being present as the adapter for the supporting leg (12), the outside dimensions of which are at least partially (54) adapted to fit the internal dimensions of the supporting leg (12) or the surfaces of the angled piece (202, 302) facing towards it, and in which at least one screw thread (53) is present for the insertion of the fixing screw (34) supporting it against the angled piece (2).

5. Furniture corner connector along the lines of Claim 4, characterised by the core (48) having on its outside coat, and especially on one of the flat ends, a radial extension (covering plate) (55) which can be inserted as a profile plate (56) on the angled piece (202, 203) reaching behind the strip-shaped protrusions (47).

6. Furniture corner connector along the lines of one of the foregoing Claims, characterised by the arms (3) of the angled piece (2) being linked to one another at their upper ends via a supporting flange (5), the horizontal surface of which corresponds as a covering surface (33) with the cross-section of the supporting leg (12).

7. Furniture corner connector along the lines of one of the foregoing Claims, characterised by the cantilevered plates (4) being arranged in pairs.

8. Furniture corner connector along the lines of one of the foregoing Claims, characterised by each of the pairs of cantilevered plated (4) having a horizontal connection at the top serving as a top flange (6).

9. Furniture corner connector along the lines of Claim 7 or 8, characterised by the stiffening bar (7) forming the top flange (8) together with the top Range (6).

10. Furniture corner connector along the lines of one of the foregoing Claims, characterised by the cantilevered plates (104) pointing upwards in the manner of a supporting arm, thus forming an upward-facing opening between this cantilevered arm (104) and the upper section (31) of the angled piece (102).

11. Furniture corner connector along the lines of one of the foregoing Claims, characterised by the limiting edge (24) facing away from the angled piece (2) and, if relevant, the face (29) of the cantilevered plate (4, 104) likewise turned away from this and towards the supporting angle (102), taking the form of a quadrant.

12. Furniture corner connector along the lines of one of the foregoing Claims, characterised by horizontally or vertically drilled holes (61, 62, 64, 65, 66, 68, 72) in the cantilevered plates (304), the top flanges (306), the stiffening bar (307) and/or the angled piece (302), with or without screw threads, for bolting on the frame arm or other parts of the furniture.

13. Furniture corner connector along the lines of one of the foregoing Claims, characterised by an extrusion piece (57) which can be inserted vertically against the angled piece (202, 203), reaching behind the strip-shaped protrusions (47), and can be arranged against the fastening lugs (59), for the horizontal or vertical mounting of additional furniture pieces.

14. Furniture corner connector along the lines of one of the foregoing Claims, characterised by a grid strip, the cross-section of which is adapted to fit the angled piece (2) and/or the supporting leg (12), being arranged between the angled piece (2) and the supporting leg (12) with slits (23) and/or grooves (22) on its long sides for the vertical fastening of other furniture parts or additional components.

15. Furniture corner connector along the lines of Claim 14, characterised by the cross-section of the grid strip (21) having sides of equal length and a 90° angle, in which arrangement the arm length can exactly fit that of the supporting angle (2).

16. Furniture corner connector along the lines of Claim 14 or 15, characterised by a row of holes (23) on the flat face of the arm of the grid strip (21), and a longitudinal groove (22), preferably with a T-shaped cross-section, on the arm surfaces facing away from the supporting leg (12).

## Revendications

1. Raccord d'angle pour meubles permettant de raccorder à angle droit, en position de montage, un pied-support (12) à placer dans le sens vertical, à deux parties de cadre (14, 15) à disposer dans le sens horizontal, menant de préférence à d'autres raccords d'angle (1) et incluant entre elles un angle droit,
- comportant une pièce d'angle (2) disposée dans le sens vertical (ligne d'angle) présentant des surfaces de guidage (13) sur les côtés d'angle (3) faisant fonction de butées à la fixation du pied-support,
- comportant deux éléments en porte à faux (4) à l'horizontale incluant un angle droit entre eux et servant de jonction aux parties du cadre et
- comportant enfin une bride-support (6) accusant une surface horizontale servant d'appui aux tables de travail et autres choses du même genre et se trouvant au moins indirectement sur la pièce d'angle (2),
caractérisé par le fait
- que chaque élément en porte à faux a une configuration de plaque en porte à faux (4) comportant une surface de serrage (16) verticale servant à la fixation des parties du cadre,
- que la bride-support (6) est disposée directement et à angle droit sur au moins une des deux plaques en porte à faux (4) et enfin par le fait
- qu'une entretoise de renforcement (7) est placée horizontalement entre les plaques en porte à faux (4).

2. Raccord d'angle pour meubles conforme à la revendication 1 caractérisé par le fait que sur la pièce d'angle (202, 302) se trouvent des élévations (47) en forme de rebord qui se sont développées à l'extrémité des côtés d'angle (203, 303) en direction du pied-support (12) et qui comportent des surfaces de guidage (213, 313) en rapport sur lesquelles on peut brider le pied-support (12) et enfin que l'on peut appréhender à l'arrière à la façon d'une queue d'aronde par des profilés (56, 61, 57) des pièces à fixer.

3. Raccord d'angle pour meubles conforme à la revendication 1 ou 2 caractérisé par le fait qu'il est possible de fixer le pied-support (12) sur le raccord d'angle pour meubles (1, 302) à l'aide au moins d'une vis de fixation (34) radiale pénétrant dans le perçage (6, 5) horizontal existant dans le côté (3) de la pièce d'angle (2), étant entendu que la tête de la vis de fixation prend de préférence appui sur une surface verticale (6, 7) (oeil) prévue dans la gorge se trouvant entre les plaques en porte à faux (4).

4. Raccord d'angle pour meubles conforme à l'une des revendications précédentes caractérisé par le fait qu'il existe un noyau (48) servant de cale pour le pied-support (12), dont les dimensions extérieures sont adaptées, partiellement (54) du moins, aux dimensions intérieures du pied-support (12) ou aux surfaces de la pièce d'angle (202, 302) tournées vers celui-ci, et dans lequel se trouve au moins un trou taraudé (53) permettant aux vis de fixation (34) prenant appui sur la pièce d'angle (2) de s'engager.

5. Raccord d'angle pour meubles conforme à la revendication 4 caractérisé par le fait que le noyau (48) accuse sur sa surface d'enveloppe, notamment sur une de ses faces frontales, une extension radiale (plaque de recouvrement) (55) susceptible d'être posée sur la pièce d'angle (202, 203) en guise de plaque profilée (56), en prenant prise à l'arrière dans les élévations (47) en forme de rebord.

6. Raccord d'angle pour meubles conforme à l'une des revendications précédentes caractérisé par le fait que les côtés (3) de la pièce d'angle (2) sont reliés entre eux en leur extrémité supérieure par une bride-support (5) dont la surface horizontale faisant office de surface d'appui (33) correspond à la section du pied-support (12).

7. Raccord d'angle pour meubles conforme à l'une des revendications précédentes caractérisé par le fait que les plaques en porte à faux (4) existent respectivement par paires.

8. Raccord d'angle pour meubles conforme à l'une des revendications précédentes caractérisé par le fait que chaque paire de plaques en porte à faux (4) présente en haut un raccord horizontal servant de bride-support (6).

9. Raccord d'angle pour meubles conforme à la revendication 7 ou 8 caractérisé par le fait que l'entretoise de renforcement (7) conjointement avec la bride-support (6) constitue la surface d'appui (8).

10. Raccord d'angle pour meubles conforme à l'une des revendications précédentes caractérisé par le fait que les plaques en porte à faux (104) sont orientées vers le haut à la manière de bras-support en formant un orifice (32) tourné vers le haut entre ce bras en porte à faux (104) et le tronçon supérieur (31) de la pièce d'angle (102).

11. Raccord d'angle pour meubles conforme à l'une des revendications précédentes caractérisé par le fait que le bord de limitation (24) non tourné vers la pièce d'angle (2) et le cas échéant le bord (29) de la plaque en porte à faux (4, 104) non tourné vers le bord de limitation et tourné vers l'angle-support (102) a la configuration d'un quart de cercle.

12. Raccord d'angle pour meubles conforme à l'une des revendications précédentes caractérisé par le fait que dans les plaques en porte à faux (304), les brides-support (306), l'entretoise de renforcement (307) et/ou que dans la pièce d'angle (302), il existe des perçages verticaux ou horizontaux (61, 62, 64, 65, 66, 68, 72) avec ou sans filet permettant de visser à bloc les parties du cadre ou d'autres pièces de meubles.

13. Raccord d'angle pour meubles conforme à l'une des revendications précédentes caractérisé par le fait qu'il existe une pièce profilée (57) pouvant être insérée verticalement sur la pièce d'angle (202, 302) en prenant prise à l'arrière dans les élévations (47) en forme de rebord et pouvant être disposée sur les éclisses de fixation (59) pour le montage horizontal ou vertical de pièces de meubles additionnelles.

14. Raccord d'angle pour meubles conforme à l'une des revendications précédentes caractérisé par le fait qu'on a disposé entre la pièce d'angle (2) et le pied-support (12), un rail ajusté dans sa section à la pièce d'angle (2) et/ou au pied-support (12), comportant des fentes (23) et/ou des rainures (22) sur les côtés longitudinaux servant à la fixation dans le sens vertical de pièces de meubles ou de pièces rapportées diverses.

15. Raccord d'angle pour meubles conforme à la revendication 14 caractérisé par le fait que la section du rail (21) est rectangle et isocèle, la longueur du côté d'angle pouvant être à fleur avec celle de l'angle-support (2).

16. Raccord d'angle pour meubles conforme à la revendication 14 ou 15 caractérisé par le fait que sur la face frontale des côtés d'angle du rail (21) se trouve une série de trous longitudinaux (23) et que les surfaces des côtés d'angle non tournées vers le pied-support (12) présentent respectivement une rainure longitudinale (22) dotée d'une section de préférence en forme de T.
